# EUROPÄISCHE PATENTSCHRIFT

(11) **EP 2 208 693 B1**
(45) Veröffentlichungstag und Bekanntmachung des Hinweises auf die Patenterteilung: **08.08.2012**
(21) Anmeldenummer: 09013392.7
(22) Anmeldetag: 23.10.2009
(51) Int. Cl.: B65G 27/08, B65G 27/30

(54) **Vibrationslinearförderer**
Linear vibration feeder
Convoyeur linéaire de vibrations

(30) Priorität: 14.01.2009 DE 102009004990
(43) Veröffentlichungstag der Anmeldung: 21.07.2010
(73) Patentinhaber: Afag Holding AG, 6052 Hergiswil (CH)
(72) Erfinder: Edbauer, Franz, 93158 Teublitz (DE)
(74) Vertreter: Blaumeier, Jörg

(56) Entgegenhaltungen:
- EP-A2- 2 011 751
- DE-U- 1 909 584

## Beschreibung

Die Erfindung betrifft einen Vibrationslinearförderer entsprechend dem einleitenden Teil des Anspruchs 1, wie er aus der EP 2 011 751 A2 bekannt ist.

Derartige Vibrationslinearförderer, die der Förderung kleiner und kleinster Bauteile beispielsweise zu einem Montageautomaten dienen, wo die Bauteile entweder bearbeitet oder verbaut werden, sind bekannt. Ein solcher Vibrationslinearförderer umfasst eine Gegenmasse und eine Nutzmasse, welche eine Förderschiene umfasst, längs welcher die Bauteile bewegt werden. Dazu werden die Gegenmasse und die Nutzmasse in eine gegenläufige Schwingbewegung gebracht, so dass es zu einer Mikrowurfbewegung der Bauteile auf der Förderschiene kommt. Die Nutz- und die Gegenmasse sind jeweils über entsprechende Lenkfedern, vornehmlich Blattfedern bzw. Blattfederpakete, mit der Bodenplatte, über die der Vibrationslinearförderer mit einem Drittgegenstand, beispielsweise einem Montagetisch, verbunden ist, schwingbeweglich verbunden. Als Antriebseinheit kommt üblicherweise ein Elektromagnet zum Einsatz, wobei zumeist der Magnetkern mit der ihn umgebenden Wicklung mit der Gegenmasse und der Magnetanker mit der Nutzmasse verbunden ist. Bei der anliegenden Wechselspannung an der Wicklung kommt es zu einem in Abhängigkeit der Spannungsfrequenz wechselnden Magnetfeld, das auf den relativ zum Magnetkern frei beweglichen, mit diesem also nicht verbundenen Anker wirkt, woraus letztlich die gegenläufige Schwingungserregung der beiden Massen resultiert. Ein solcher Vibrationslinearförderer ist beispielsweise aus der EP 0 529 185 A1 bekannt.

Die Nutzmasse und die Gegenmasse in Verbindung mit den Lenkfedern bilden folglich je ein eigenständiges Schwingsystem, welches mit ein und derselben Erregerkraft gegenphasig angeregt wird. Die beiden Massen sollen folglich um 180° phasenversetzt schwingen. Bei einer solchen gegensinnigen Schwingung gleichen sich die Reaktionskräfte in der Bodenplatte aus, so dass keine Restkräfte in den Untergrund eingeleitet werden. Grundvoraussetzung hierfür ist allerdings nicht nur, dass die beiden Massen, also die Nutzmasse und die Gegenmasse, sowie die Federsteifigkeit der Lenkfedern exakt gleich groß sind, sondern es hat sich bei Experimenten herausgestellt, dass die Nutzmasse und die Gegenmasse selbst möglichst identische Eigenschaften aufweisen sollten, um einen Schwingkräfteausgleich bzw. ein exaktes gegensinniges Schwingverhalten der Nutzmasse und der Gegenmasse zu erzielen. Unter Eigenschaften der Massen sind neben den verwendeten Werkstoffen auch Materialgrößen wie beispielsweise die Steifigkeit oder der Elastizitätsmodul zu verstehen.

Solche ideale Bedingungen zu erreichen ist in der Realität so gut wie nicht möglich, so dass sich daraus ein gewisser Phasenversatz beim gegensinnigen Schwingen der Nutzmasse und der Gegenmasse ergibt. Bereits kleine Unterschiede zwischen den Massen bzw. den Federsteifigkeiten der meist als Blattfederpakete ausgebildeten Lenkfedern, aber auch kleine Unterschiede in den Eigenschaften der Massen selbst (Steifigkeit, Dämpfung,...) führen zu unterschiedlichen Kraftwirkungen der Nutzmasse und der Gegenmasse und letzten Endes zu erhöhten Restschwingungen im Unterbau. Nur gleiche Massen für die Nutzmasse und die Gegenmasse oder gleiche Federsteifigkeiten alleine sind also kein Garant für minimale Restschwingkräfte.

Der vorliegenden Erfindung liegt daher die Aufgabe zugrunde, einen Vibrationslinearförderer mit Schwingkräfteausgleich zu schaffen, welcher bezüglich der Massen- und Eigenschaftsunterschiede der Nutzmasse und der Gegenmasse sowie der Lenkfederunterschiede toleranter ist, weniger Restschwingungen in den Untergrund einleitet und somit letztendlich anwenderfreundlicher ist.

Zur Lösung dieses Problems ist einVibrationslinearförderer nach Anspruch 1 vorgesehen.

Es wird also vorgeschlagen, die beiden bislang unabhängigen Schwingsysteme der Nutzmasse und der Gegenmasse durch ein elastisches Verbindungselement, welches eine bestimmte Federsteifigkeit aufweist, aneinander zu koppeln, um dem Gesamtsystem so einen weiteren Freiheitsgrad zu geben, der zum Ausgleich von Massen- beziehungsweise Eigenschaftsunterschieden dient. Dabei sind die Antriebseinheit und das Verbindungselement voneinander unabhängig, das bedeutet, sie beeinflussen sich nicht gegenseitig, wobei insbesondere die Antriebseinheit nicht am Verbindungselement angreift. Dazu ist das Verbindungselement bevorzugt entfernt von der Antriebseinheit angeordnet. Das Verbindungselement bietet somit nicht nur einen weiteren Freiheitsgrad zur Anpassung der Eigenschaften der Schwingsysteme der Nutzmasse und der Gegenmasse, sondern es muss auch nicht mehr die gesamte Kraftkompensation in der Bodenplatte stattfinden.

Durch die Federsteifigkeit des Verbindungselements erhält das Gesamtschwingsystem, wie bereits erwähnt, ein Freiheitsgrad, der es der Nutzmasse und der Gegenmasse ermöglicht, sich eigenständig ein Optimum zu suchen, ohne dass von außen eingegriffen wird. Die Massen- und Eigenschaftsverhältnisse stellen die Einflussgrößen der Schwingbewegung und die elastische Verbindung ermöglicht das optimale Zusammenspiel der beiden Schwingteile. Das elastische Verbindungselement besitzt folglich eine bestimmte Federsteifigkeit. Diese Federsteifigkeit verteilt sich je nach Massen- und Eigenschaftsunterschieden der beiden Schwingmassen so, dass die Eigenfrequenzen der Nutzmasse und der Gegenmasse immer identisch sind. Durch das elastische Verbindungselement werden die Auswirkungen der Massen- und Eigenschaftsunterschiede der Schwingmassen folglich nahezu ausgeblendet, so dass vom Gesamtschwingsystem praktisch nahezu keine Restkräfte mehr in die Bodenplatte und somit den Unterbau eingeleitet werden.

Die von dem Verbindungselement erzeugten Kräfte auf die Nutzmasse und die Gegenmasse sind immer gleich groß, jedoch genau um 180° phasenverschoben, also gegensinnig. Der Kräfteausgleich und die 180° Phasenlage liegt auch bei unterschiedlichen Massen der Nutz- und Gegenmasse vor, da sich in diesem Fall die Schwingweiten von Nutz- und Gegenmasse umgekehrt proportional zu den Masen verändern. Diese Proportionalität wird durch das Verbindungselement und die damit gleichen Eigenfrequenzen von Nutz- und Gegenmasse exakt wiedergegeben. Bei Vibrationsförderern nach dem aktuellen Stand der Technik ist diese genaue Proportionalität nicht gegeben, da Nutz- und Gegenmasse unterschiedliche Eigenfrequenzen aufweisen. So wird durch das Verbindungselement in beiden Schwingrichtungen eine Phasenlage von 180° unterstützt. Beispielsweise bei der Schwingungserregung durch die Antriebseinheit werden Nutz- und Gegenmasse genau gegenphasig angezogen und durch das Verbindungselement wieder genau gegenphasig abgestoßen. Sobald die Antriebseinheit abschaltet, werden die Nutz- und die Gegenmasse durch das Verbindungselement gegensinnig mit derselben Kraft abgestoßen.

Der erfindungsgemäße Vibrationslinearförderer kompensiert also wenigstens teilweise die Eigenschaftsunterschiede, insbesondere die Massenunterschiede, die in der Realität selten einen optimalen Wert haben. Es werden vorteilhafterweise wenige Restkräfte in den Unterbau eingeleitet und es ist kein exakter Massenausgleich, beziehungsweise allgemein Eigenschaftsausgleich, mehr erforderlich.

In besonders vorteilhafter Ausgestaltung der vorliegenden Erfindung kann vorgesehen sein, dass die Lenkfedern eine Lenkfedersteifigkeit aufweisen, die kleiner als die oder gleich der Federsteifigkeit des Verbindungselements ist. Die Gesamtfedersteifigkeit der einzelnen Schwingsysteme (Nutzmassen-System, Gegenmassen-System) ist also definiert durch einen Anteil der Federsteifigkeit des Verbindungselements und der Lenkfedersteifigkeit, also ein Anteil der Federsteifigkeit der Verbindungsfeder und der Lenkfedern. Wie bereits erläutert, werden die Trägheitskräfte bei dem erfindungsgemäßen Vibrationslinearförderer wenigstens teilweise durch das Verbindungselement kompensiert. Diese Kompensation hängt vom Verhältnis der Federsteifigkeiten von Verbindungselement und Lenkfedern ab. Umso größer also der Anteil der Federsteifigkeit des Verbindungselements an der Gesamtfedersteifigkeit ist, umso geringer ist der Anteil der Trägheitskräfte, welche in die Bodenplatte eingeleitet werden und sich dort aufheben. Einzig und allein der Anteil der Reaktionskräfte durch die Lenkfederdurchbiegung, also die Federkräfte, wird komplett in die Bodenplatte eingeleitet. Ist die Lenkfedersteifigkeit bei einem erfindungsgemäßen Vibrationslinearförderer möglichst gering, so sind auch die in die Bodenplatte eingeleiteten Federkräfte gering. Es ergibt sich also, dass es besonders vorteilhaft ist, wenn die Federsteifigkeit des Verbindungselements möglichst groß gegenüber der Lenkfedersteifigkeit ist, da dann die in die Bodenplatte eingeleiteten Reaktionskräfte von Nutz- und Gegenmasse minimal gehalten werden. Die dennoch eingeleiteten Reaktionskräfte sind, bedingt durch den erfindungsgemäßen Gesamtaufbau, im Wesentlichen gleich groß, wirken aber gegensinnig. Somit heben sie sich in der Bodenplatte auf. Die Lenkfedern, welche im Übrigen mit besonderem Vorteil als Federpakete mit wenigstens zwei Blattfedern ausgebildet sein können, dienen beim erfindungsgemäßen Vibrationslinearförderer demnach hauptsächlich der Führung der Nutz- beziehungsweise der Gegenmasse und haben, ebenfalls in der genannten Ausgestaltung als Blattfederpakete, zudem eine gewisse dämpfende Wirkung, die eine kontrollierte Schwingung ermöglicht.

Zweckmäßig ist es ferner, wenn die Wirklinie des Verbindungselements parallel zu oder auf den Wirklinien der Nutzmasse und der Gegenmasse liegt. Auf diese Weise kann die Steifigkeit des Verbindungselements vollständig in Wirkrichtung der Schwingmassen und somit der Trägheitskräfte wirken.

Erfindungsgemäß können zwei oder vier insbesondere symmetrisch angeordnete Verbindungselemente vorgesehen sein. Durch die Nutzung einer Mehrzahl von Verbindungselementen und insbesondere deren Anordnung unter bestimmten Symmetriebedingungen ist es möglich, Verspannungen in der Lagerung der Nutzmasse und der Gegenmasse im Wesentlichen auszugleichen. Auf diese Weise wird das Gesamtschwingsystem weiter stabilisiert und die Eigenschaften der Teilschwingsysteme Nutzmasse/Gegenmasse können besser angeglichen werden.

Konkret kann vorgesehen sein, dass das Verbindungsteil eine Feder, insbesondere eine Zugfeder und/oder eine Druckfeder ist. Eine solche Feder hat klar definierbare Federsteifigkeiten und ist einfach verarbeitbar, insbesondere einfach zwischen der Nutzmasse und der Gegenmasse anordenbar.

So kann beispielsweise vorgesehen sein, dass das Verbindungselement, insbesondere die Feder, in Bohrungen jeweils an der Nutzmasse und der Gegenmasse eingesetzt ist. An der Nutzmasse und der Gegenmasse sind folglich sich im Montagezustand gegenüberliegende Bohrungen vorgesehen, in die beispielsweise die Feder bei der Montage eingesetzt werden kann.

Alternativ oder zusätzlich kann vorgesehen sein, dass das Verbindungselement, insbesondere die Feder, auf wenigstens einen an der Nutzmasse und/oder der Gegenmasse vorgesehenen Führungsdorn aufgesetzt ist. Ein solcher Führungsdorn, der sich besonders für das Aufsetzen und Führen einer spiralförmigen Feder eignet, kann beispielsweise innerhalb einer Bohrung angeordnet sein, um die Kopplung zu verbessern und die Wirklinie möglichst klar zu definieren.

Wie bereits erwähnt, kann als Lenkfeder ein Blattfederpaket mit wenigstens zwei Blattfedern vorgesehen sein. Insbesondere hat sich gezeigt, dass bei Verwendung von lediglich zwei Blattfedern eine recht niedrige Lenkfedersteifigkeit erreicht werden kann und dennoch eine Dämpfungswirkung durch die Verschiebung der einzelnen Blattfedern aneinander gegeben ist.

Weitere Vorteile und Einzelheiten der vorliegenden Erfindung ergeben sich aus den im Folgenden dargestellten Ausführungsbeispielen sowie anhand der Zeichnung. Dabei zeigen:
- Fig. 1: eine Prinzipskizze eines Schnitts durch einen erfindungsgemäßen Vibrationslinearförderer, und
- Fig. 2: eine perspektivische Ansicht eines erfindungsgemäßen Vibrationslinearförderers.

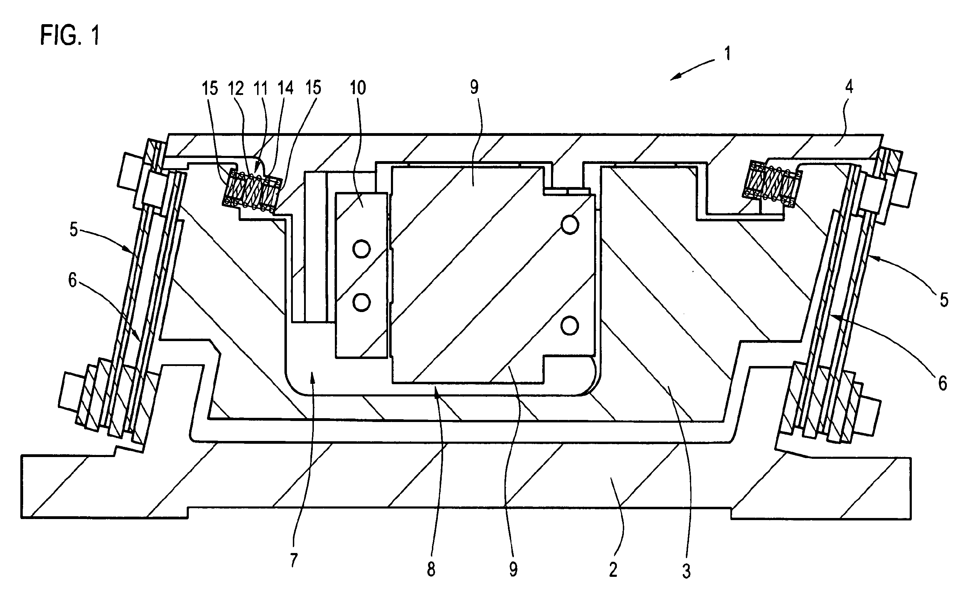

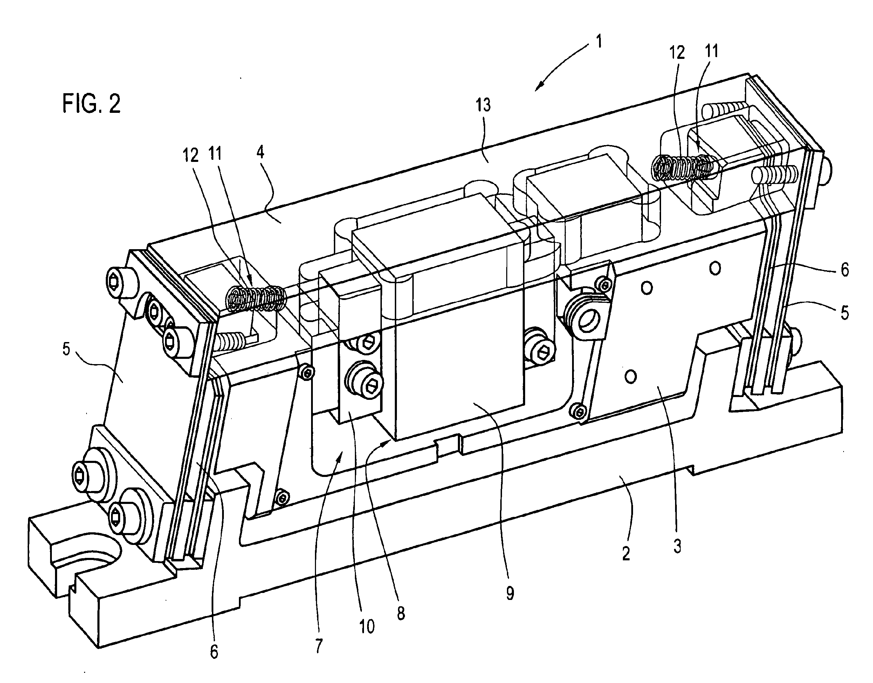

Fig. 1 zeigt in Form einer Prinzipskizze einen Schnitt durch einen erfindungsgemäßen Vibrationslinearförderer 1. Er umfasst eine Bodenplatte 2, eine Gegenmasse 3 sowie eine Nutzmasse 4, von der nur ein Teil dargestellt ist. Nicht gezeigt ist die auf der Nutzmasse 4 anzuordnende Förderschiene, entlang derer die mit dem Vibrationslinearförderer 1 zu bewegenden Bauteile gefördert werden. Die Gegenmasse 3 und die Nutzmasse 4 sind jeweils an beiden Enden über Lenkfedern 5, 6 mit der Bodenplatte 2 verbunden, wobei die Lenkfedern 5, 6 der Führung und Dämpfung der Schwingung der Nutzmasse 4 gegen die Gegenmasse 3 dienen, was im Folgenden noch näher dargelegt wird. Die Lenkfedern 5, 6 sind jeweils aus zwei Blattfedern bestehende Blattfederpakete. Die Anordnung der Lenkfedern 5, 6 ist insbesondere aus der Fig. 2, die eine Perspektivansicht des Vibrationslinearförderers 1 zeigt, leicht ersichtlich. Dabei sind die die Gegenmasse tragenden Lenkfedern 6 jeweils innen angeordnet, die die Nutzmasse 4 führenden Lenkfedern 5 jeweils außen.

Zentral ist ein Aufnahmeraum 7 vorgesehen, in dem eine Antriebseinheit 8 umfassend einen Magneten 9 und einen Anker 10 vorgesehen ist. Der Magnet 9 umfasst einen hier nicht näher dargestellten Schwingmotor mit einem Magnetkern und einer diesen umgebenden Wicklung. Der grundsätzliche Aufbau solcher Antriebseinheiten 8 ist bekannt und soll nicht im Detail dargestellt werden. Im Betrieb wird die Wicklung des Magneten 9 mit einer entsprechenden Wechselspannung belegt, so dass sich ein Wechselmagnetfeld ergibt, über das der Anker 10 pulsierend angezogen wird, worüber die gegenläufige Schwingung der Gegenmasse 3 zur Nutzmasse 4 erzeugt wird. Es sei jedoch an dieser Stelle bereits angemerkt, dass selbstverständlich auch andere Antriebseinheiten denkbar sind, beispielsweise piezoelektrische Antriebseinheiten oder dergleichen.

Bei dem Vibrationslinearförderer 1 sind die Nutzmasse 4 und die Gegenmasse 3 nun unabhängig von der Antriebseinheit 8 über zwei Verbindungselemente 11 aneinandergekoppelt, die elastisch sind. Sie weisen also eine Federsteifigkeit auf, die im dargestellten Beispiel ca. 90 % der Gesamtfedersteifigkeit, die sich aus der Federsteifigkeit der Verbindungselemente 11 und der Lenkfedersteifigkeit der Lenkfeder 5, 6 ergibt, ausmacht. Ersichtlich sind die Antriebseinheit 8 und die elastischen Verbindungselemente 11 entfernt voneinander angeordnet sowie unabhängig voneinander, so dass sie sich nicht gegenseitig beeinflussen. Die Verbindungselemente 11, die vorliegend im Übrigen als Druckfedern 12 ausgebildet sind, koppeln also die vormals unabhängigen Schwingsysteme der Gegenmasse 3 und der Nutzmasse 4 aneinander, so dass im Gesamtschwingsystem ein weiterer Freiheitsgrad gegeben ist, der unter Ausgleich von Eigenschaftsunterschieden der Massen, also Gegenmasse 3 und Nutzmasse 4, und der Lenkfedern 5, 6 zu einer Angleichung der Eigenschaften der Schwingsysteme der Gegenmasse 3 und der Nutzmasse 4 führt, so dass der Vibrationslinearförderer 1 toleranter gegenüber Eigenschaftsunterschieden, insbesondere gegenüber Massenunterschieden, ist. Insbesondere verteilt sich die Federsteifigkeit der Verbindungselemente 11 so, dass die Eigenfrequenzen der Gegenmasse 3 und der Nutzmasse 4 immer identisch sind. Zudem werden die Trägheitskraftanteile der Reaktionskräfte - da die Federsteifigkeit des Verbindungselements 11 einen Großteil der Gesamtfedersteifigkeit ausmacht - zum größten Teil über die Verbindungselemente 11 und nicht mehr über die Bodenplatte 2 ausgeglichen. Insgesamt werden durch die Verbindungselemente 11 also die Massen- und Eigenschaftsunterschiede der beiden Schwingsysteme nahezu ausgeblendet, so dass vom Gesamtschwingsystem im Wesentlichen keine Restkräfte mehr in die Bodenplatte 2 und den Unterbau eingeleitet werden.

Wie aus den Figuren ferner zu entnehmen ist - hierbei ist zu beachten, dass aus Gründen der einfacheren Darstellung eine Befestigungsplatte 13 für die Nutzmasse 4 in Fig. 2 transparent dargestellt ist - sind die Lenkfedern 5, 6 und die Druckfedern 12 um den gleichen Winkel geneigt. Die Verbindungselemente 11 wirken also entlang derselben Wirklinie, entlang der auch die Schwingung erfolgt. Idealerweise, aber nicht zwingend, liegen auch die Massenschwerpunkte der Gegenmasse 3 und der Nutzmasse 4 auf dieser Wirklinie.

Ferner ist ersichtlich, dass die Verbindungselemente 11 an symmetrischen Punkten im Vibrationslinearförderer 1 angeordnet sind. Auf diese Weise werden Verspannungen vermieden.

Die Druckfedern 12 sind dabei in Bohrungen 14 der Gegenmasse 3 und der Nutzmasse 4 eingesetzt. In den Bohrungen 14 sind Führungsdorne 15 angeordnet, auf die die Druckfedern 12 aufgesetzt werden und die der Führung und Halterung der Druckfedern 12 dienen.

Es sind auch Ausgestaltungen denkbar, in denen vier Verbindungselemente 11 vorgesehen sind. Insgesamt wird durch die elastischen Verbindungselemente 11 dem Vibrationsförderer 1 folglich ein zusätzlicher Freiheitsgrad gegeben, so dass sich das Gesamtsystem selbst ein gemeinsames Optimum suchen kann. So werden trotz Eigenschaftsdifferenzen, insbesondere Massendifferenzen, die Eigenschaften der Schwingsysteme dennoch weitgehend angeglichen.

## Patentansprüche

1. Vibrationslinearförderer (1), umfassend eine Nutzmasse (4) und eine Gegenmasse (3), die über eine Antriebseinheit (8) in entgegengesetzte Richtungen schwingend bewegbar und über insbesondere als Blattfedern ausgebildete Lenkfedern (5, 6) an eine Bodenplatte (2) gekoppelt sind, **dadurch gekennzeichnet, dass** die Nutzmasse (4) und die Gegenmasse (3) über wenigstens ein elastisches, von der Antriebseinheit (8) unabhängiges Verbindungselement (11) mit einer Federsteifigkeit aneinander gekoppelt sind.

2. Vibrationslinearförderer nach Anspruch 1, **dadurch gekennzeichnet, dass** die Lenkfedem (5, 6) eine Lenkfedersteifigkeit aufweisen, die kleiner als die oder gleich der Federsteifigkeit des Verbindungselements (11) ist.

3. Vibrationslinearförderer nach einem der vorangehenden Ansprüche, **dadurch gekennzeichnet, dass** die Wirklinie des Verbindungselements (11) parallel zu oder auf den Wirklinien der Nutzmasse (4) und der Gegenmasse (3) liegt.

4. Vibrationslinearförderer nach einem der vorangehenden Ansprüche, **dadurch gekennzeichnet, dass** zwei oder vier insbesondere symmetrisch angeordnete Verbindungselemente (11) vorgesehen sind.

5. Vibrationslinearförderer nach einem der vorangehenden Ansprüche, **dadurch gekennzeichnet, dass** das Verbindungsteil (11) eine Feder, insbesondere eine Zugfeder und/oder eine Druckfeder (12), ist.

6. Vibrationslinearförderer nach einem der vorangehenden Ansprüche, **dadurch gekennzeichnet, dass** das Verbindungselement (11), insbesondere die Feder, in Bohrungen (14) jeweils an der Nutzmasse (4) und der Gegenmasse (3) eingesetzt ist.

7. Vibrationslinearförderer nach einem der vorangehenden Ansprüche, **dadurch gekennzeichnet, dass** das Verbindungselement (11), insbesondere die Feder, auf wenigstens einen an der Nutzmasse (4) oder der Gegenmasse (3) vorgesehenen Führungsdorn (15) aufgesetzt ist.

8. Vibrationslinearförderer nach einem der vorangehenden Ansprüche, **dadurch gekennzeichnet, dass** als Lenkfeder (5, 6) ein Blattfederpaket mit wenigstens zwei Blattfedern vorgesehen ist.

## Claims

1. A linear vibration conveyor (1) comprising a working mass (4) and a counter mass (3), which are displaceable in opposite directions in a vibrating manner via a drive unit (8) and are coupled to a base plate (2) via deflection springs (5, 6) especially embodied as plate springs,
**characterised in that**
the working mass (4) and the counter mass (3) are coupled to one another with a spring stiffness via at least one elastic connecting element (11) independent from the drive unit (8).

2. The linear vibration conveyor according to claim 1,
**characterised in that**
the deflection springs (5, 6) provide a deflection-spring stiffness which is less than or the same as the spring
stiffness of the connecting element (11).

3. The linear vibration conveyor according to any one of the preceding claims,
**characterised in that**
the line of action of the connecting element (11) is disposed parallel to or on the lines of action of the working mass (4) and the counter mass (3).

4. The linear vibration conveyor according to any one of the preceding claims,
**characterised in that**
two or four especially symmetrically arranged connecting elements (11) are provided.

5. The linear vibration conveyor according to any one of the preceding claims,
**characterised in that**
the connecting element (11) is a spring, especially a tensile spring and/or a compression spring (12).

6. The linear vibration conveyor according to any one of the preceding claims,
**characterised in that**
the connecting element (11), especially the spring, is inserted in boreholes (14) respectively in the working mass (4) and the counter mass (3).

7. The linear vibration conveyor according to any one of the preceding claims,
**characterised in that**
the connecting element (11), especially the spring, is placed on at least one guide pin (15) provided on the working mass (4) or the counter mass (3).

8. The linear vibration conveyor according to any one of the preceding claims,
**characterised in that**
a plate spring packet with at least two plate springs is provided as the deflection spring (5, 6).

## Revendications

1. Convoyeur linéaire à vibrations (1), comportant une masse utile (4) et une contre-masse (3) qui peuvent être déplacées par oscillations dans des sens opposés par le biais d'une unité d'entraînement (8) et sont couplées à un socle (2) par le biais de ressorts de direction (5, 6) réalisés en particulier sous la forme de ressorts à lames, **caractérisé en ce que** la masse utile (4) et la contre-masse (3) sont couplées l'une à l'autre, avec rigidité de ressort, par le biais d'au moins un élément de raccordement (11) élastique, indépendant de l'unité d'entraînement (8).

2. Convoyeur linéaire à vibrations selon la revendication 1, **caractérisé en ce que** les ressorts de direction (5, 6) présentent une rigidité de ressort de direction qui est inférieure ou égale à la rigidité de ressort de l'élément de raccordement (11).

3. Convoyeur linéaire à vibrations selon l'une quelconque des revendications précédentes, **caractérisé en ce que** la ligne active de l'élément de raccordement (11) est parallèle aux ou repose sur les lignes actives de la masse utile (4) et de la contre-masse (3).

4. Convoyeur linéaire à vibrations selon l'une quelconque des revendications précédentes, **caractérisé en ce qu'**on a prévu deux ou quatre éléments de raccordement (11) disposés en particulier de manière symétrique.

5. Convoyeur linéaire à vibrations selon l'une quelconque des revendications précédentes, **caractérisé en ce que** la pièce de raccordement (11) est un ressort, en particulier un ressort de traction et/ou un ressort de pression (12).

6. Convoyeur linéaire à vibrations selon l'une quelconque des revendications précédentes, **caractérisé en ce que** l'élément de raccordement (11), en particulier le ressort, est inséré dans des alésages (14), sur la masse utile (4) et la contre-masse (3) respectivement.

7. Convoyeur linéaire à vibrations selon l'une quelconque des revendications précédentes, **caractérisé en ce que** l'élément de raccordement (11), en particulier le ressort, est posé sur au moins un mandrin de guidage (15) prévu sur la masse utile (4) ou la contre-masse (3).

8. Convoyeur linéaire à vibrations selon l'une quelconque des revendications précédentes, **caractérisé en ce qu'**on a prévu, comme ressort de direction (5, 6), un ensemble de ressorts à lames comportant au moins deux ressorts à lames.
